# EUROPEAN PATENT APPLICATION

(11) **EP 4 378 613 A1**
(43) Date of publication of application: **05.06.2024**
(21) Application number: 21951945.1
(22) Date of filing: 30.07.2021
(51) Int. Cl.: B23H 7/20

(54) **CONTROL DEVICE AND CONTROL METHOD FOR CONTROLLING WIRE ELECTRICAL DISCHARGE MACHINE**

(71) Applicant: FANUC CORPORATION, Oshino-mura Minamitsuru-gun Yamanashi 401-0597 (JP)
(72) Inventor: IRIE, Shouta, Minamitsuru-gun, Yamanashi 401-0597 (JP); HIRAGA, Kaoru, Minamitsuru-gun, Yamanashi 401-0597 (JP); YAMAOKA, Masahide, Minamitsuru-gun, Yamanashi 401-0597 (JP); KATO, Takumi, Minamitsuru-gun, Yamanashi 401-0597 (JP)
(74) Representative: Schmidt, Steffen J.
(86) International application number: PCT/JP2021/028504
(87) International publication number: WO 2023/007748

(57) **Abstract**

A control device (30) for executing a control method for controlling a wire electrical discharge machine (10) comprises: a machining control unit (310) that interrupts first machining (PA), and resumes the first machining after completion of second machining (PB); an acquisition unit (324) that acquires a detection signal from a sensor (50); a measuring unit (326) that measures, on the basis of the detection signal, a first consumption amount (CA1) of a wire electrode (14) from the start to the interruption of the first machining, and a second consumption amount (CA2) from the resuming to the end of the first machining; and a consumption amount calculation unit (330) that calculates a first total consumption amount (CA) of the wire electrode consumed in the first machining.

## Description

### TECHNICAL FIELD

The present invention relates to a control device and a control method for controlling a wire electric discharge machine (wire electrical discharge machine).

### BACKGROUND ART

There is disclosed a numerically controlled machine tool which, in the case that a request for an interruption machining has been made during machining, shortens the waiting time period for the interruption machining (refer to JP 2008-027261 A) .

### SUMMARY OF THE INVENTION

According to the disclosure of JP 2008-027261 A, in the case that machining is interrupted due to an interruption machining, a problem arises in that it is not possible to obtain a total consumption amount of the wire electrode that is consumed by machining until interrupting of the machining and machining after resuming of the machining.

The present invention has the object of solving the aforementioned problem.

A first aspect of the present invention is characterized by a control device configured to control a wire electric discharge machine, the control device including: a machining control unit configured to: control the wire electric discharge machine to thereby carry out a first machining on a first workpiece; and in a case that an interruption request is made during the first machining, control the wire electric discharge machine to thereby interrupt the first machining, carry out a second machining on a second workpiece that differs from the first workpiece, and resume the first machining after the second machining has been completed; an acquisition unit configured to acquire a detection signal from a sensor configured to detect a rotational position of a roller configured to feed out a wire electrode of the wire electric discharge machine; a measurement unit configured to measure, based on the detection signal, a first consumption amount of the wire electrode consumed by the first machining from starting of the first machining until interruption of the first machining, and a second consumption amount of the wire electrode consumed by the first machining from resuming of the first machining until ending of the first machining; and a consumption amount calculation unit configured to calculate, using the first consumption amount and the second consumption amount, a first total consumption amount of the wire electrode consumed by the first machining.

A second aspect of the present invention is characterized by a control method for controlling a wire electric discharge machine, the control method including: performing machining control to: control the wire electric discharge machine to thereby carry out a first machining on a first workpiece; and in a case that an interruption request is made during the first machining, control the wire electric discharge machine to thereby interrupt the first machining, carry out a second machining on a second workpiece that differs from the first workpiece, and resume the first machining after the second machining has been completed; acquiring a detection signal from a sensor configured to detect a rotational position of a roller configured to feed out a wire electrode of the wire electric discharge machine; measuring, based on the detection signal, a first consumption amount of the wire electrode consumed by the first machining from starting of the first machining until interruption of the first machining, and a second consumption amount of the wire electrode consumed by the first machining from resuming of the first machining until ending of the first machining, and by using the first consumption amount and the second consumption amount, calculating a first total consumption amount of the wire electrode consumed by the first machining.

According to the present invention, in the case that machining is interrupted due to an interruption machining, it is possible to obtain a total consumption amount of the wire electrode consumed by the machining until interruption of the machining and by the machining after resuming of the machining.

### BRIEF DESCRIPTION OF DRAWINGS

FIG. 1 is a diagram showing a configuration of a wire electric discharge machine including a control device;
FIG. 2 is a diagram showing a configuration of the control device shown in FIG. 1 and control thereof;
FIG. 3A is a diagram illustrating an example of a machining PA of a workpiece WA;
FIG. 3B is a diagram showing an example of a machining PB of a workpiece WB;
FIG. 4A is a diagram showing, in chronological order, an example of control in which machining of the workpiece WA is interrupted, and machining of the workpiece WB is performed;
FIG. 4B is a diagram showing an example of a consumption amount of a wire electrode that is consumed during machining;
FIG. 5 is a flowchart showing a control process of the wire electric discharge machine by the control device in one embodiment;
FIG. 6 is a flowchart showing a control process of the wire electric discharge machine by the control device in one embodiment;
FIG. 7A is a diagram showing, in chronological order, an example of control in which machining of the workpiece WA is interrupted again, and machining of a workpiece WC is performed;
FIG. 7B is a diagram showing an example of a consumption amount of a wire electrode that is consumed during machining;
FIG. 8 is a flowchart showing a control process of the wire electric discharge machine by the control device in an exemplary modification;
FIG. 9 is a flowchart showing a control process of the wire electric discharge machine by the control device in an exemplary modification; and
FIG. 10 is a flowchart showing a control process of the wire electric discharge machine by the control device in an exemplary modification.

### DETAILED DESCRIPTION OF THE INVENTION

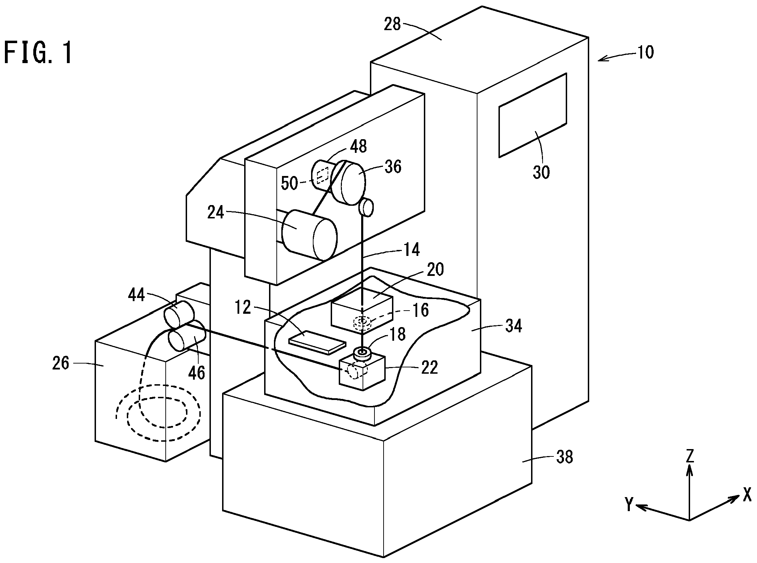

FIG. 1 is a diagram showing the configuration of a wire electric discharge machine 10 including a control device 30. By applying a voltage to an inter-electrode gap formed between a wire electrode 14 and an object to be machined (workpiece) and thereby generating an electric discharge, the wire electric discharge machine 10 carries out electric discharge machining of the workpiece. The wire electric discharge machine 10 carries out the electric discharge machining while causing the wire electrode 14 to move relatively with respect to the workpiece along a path designated by a predetermined program. The relative movement between the wire electrode 14 and the workpiece is performed by causing a table 12 that supports the workpiece to be moved.

The wire electric discharge machine 10 includes an upper wire guide 16, a lower wire guide 18, an upper guide block 20, and a lower guide block 22. The upper wire guide 16 supports the wire electrode 14 on an upper side (a side in the +Z direction) of the table 12. The lower wire guide 18 supports the wire electrode 14 on a lower side (a side in the -Z direction) of the table 12. The upper wire guide 16 is installed on the upper guide block 20. The lower wire guide 18 is installed on the lower guide block 22. The wire electrode 14 is supplied at a predetermined speed from a wire bobbin 24 in a feeding direction. The wire electrode 14 passes through a roller 36, the upper wire guide 16, and the lower wire guide 18, is sandwiched and gripped between a pinch roller 44 and a feed roller 46, and is collected in a collection box 26.

A feed motor 48 is attached to the roller 36 that feeds out the wire electrode 14. Due to the feed motor 48 driving the roller 36, the roller 36 feeds out the wire electrode 14 at the predetermined speed as noted previously. A rotational position detection sensor 50 that detects the rotational position of the roller 36 is provided in the feed motor 48. As an example of the rotational position detection sensor 50, there may be cited an encoder or the like. The rotational position of the roller 36 detected by the rotational position detection sensor 50 depends on a fed amount by which the wire electrode 14 is fed out by the roller 36. Furthermore, the wire electric discharge machine 10 includes the control device 30, and a machining electrical power source 28 that supplies a voltage to the inter-electrode gap.

The control device 30 includes a processing circuit and a memory in which a program is stored. By executing the program, the processing circuit functions as the control device 30 of the present embodiment. The control device 30 controls machining of the workpiece by the wire electric discharge machine 10. The memory includes a volatile memory such as a RAM or the like, and a non-volatile memory such as a ROM and a flash memory or the like. The processing circuit includes a processor such as a CPU or the like. The X direction, the Y direction, and the Z direction shown in FIG. 1 are orthogonal to each other, and the -Z direction is the direction of gravity.

In the case that wire electric discharge machining is carried out, a work pan (a work tank) 34 may store a dielectric working fluid. In this case, the table 12, the workpiece, the upper wire guide 16, the upper guide block 20, the lower wire guide 18, and the lower guide block 22 are immersed in the working fluid. The work pan 34 is installed on a bed 38. The working fluid in the work pan 34 contains machining chips (sludge) therein that result from machining. The machining chips contained in the working fluid is removed by a filter that is provided in a non-illustrated working fluid supply device. The fed amount of the wire electrode 14 and the amount of the machining chips resulting from machining are correlated with each other. Accordingly, the filter is consumed in accordance with the total consumption amount of the wire electrode 14 that is consumed during machining.

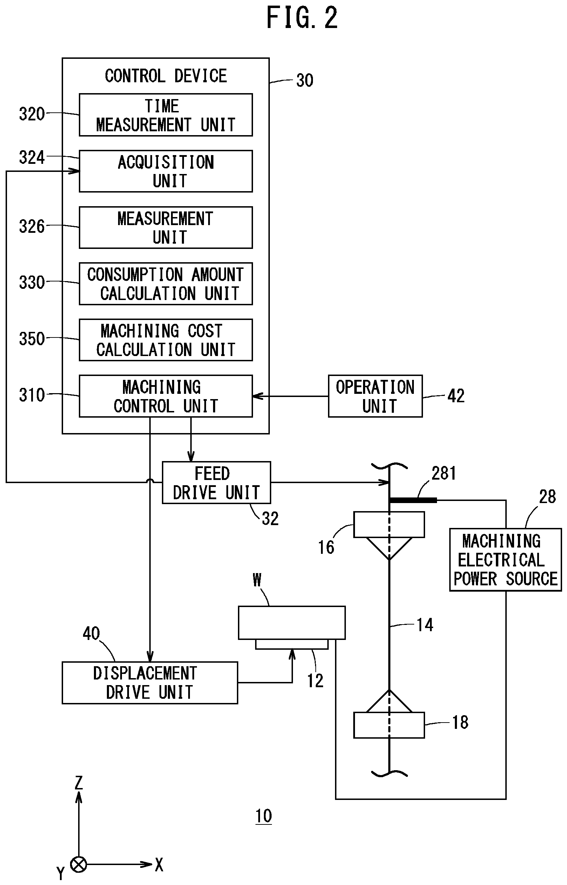

FIG. 2 is a diagram showing the configuration of the control device 30 shown in FIG. 1 and control thereof. In FIG. 2, there is shown a portion of the configuration of the wire electric discharge machine 10 that is shown in FIG. 1. In FIG. 2, there is further shown an object to be machined (workpiece) W, a displacement drive unit 40, a feed drive unit 32, an electrode pin 281, and an operation unit 42, none of which are shown in FIG. 1. The workpiece W is mounted on the table 12.

The displacement drive unit 40 drives the table 12 in order to cause the wire electrode 14 to move relatively with respect to the workpiece W in the X direction and the Y direction. The displacement drive unit 40 includes an X-axis motor, a Y-axis motor, an X-axis drive transmission mechanism, and a Y-axis drive transmission mechanism. The X-axis motor is a motor for moving the table 12 in the X direction, and the Y motor is a motor for moving the table 12 in the Y direction. The X-axis drive transmission mechanism is a mechanism for converting the rotational motion of the X-axis motor into linear motion of the table 12 in the X direction. The Y-axis drive transmission mechanism is a mechanism for converting the rotational motion of the Y-axis motor into linear motion of the table 12 in the Y direction. Each of the X-axis drive transmission mechanism and the Y-axis drive transmission mechanism is constituted by a ball screw, a nut installed on the table 12, and the like. Moreover, it should be noted that each of the X-axis motor and the Y-axis motor is provided with a rotational position detection sensor (an encoder) that detects the rotational position.

Instead of the displacement drive unit 40, a displacement drive unit that drives the upper guide block 20 and the lower guide block 22 may be provided. Further, in addition to the displacement drive unit 40, a displacement drive unit that drives the upper guide block 20 and the lower guide block 22 may be provided.

The feed drive unit 32 includes the roller 36 and the feed motor 48. By undergoing rotation, the roller 36 feeds out the wire electrode 14 that is wound around the wire bobbin 24, to the workpiece W. The feed motor 48 causes the roller 36 to rotate. The feed motor 48 is provided with a rotational position detection sensor 50 (an encoder) that detects the rotational position thereof. The electrode pin 281 contacts the wire electrode 14. Consequently, the machining electrical power source 28 is capable of applying a voltage to the electrode pin 281 and to the workpiece W, and as a result, it is possible to apply a voltage to the inter-electrode gap.

By the processing circuit of the control device 30 executing a program, the control device 30 functions as a machining control unit 310, a time measurement unit 320, an acquisition unit 324, a measurement unit 326, a consumption amount calculation unit 330, and a machining cost calculation unit 350. At least a portion of the machining control unit 310, the time measurement unit 320, the acquisition unit 324, the measurement unit 326, the consumption amount calculation unit 330, and the machining cost calculation unit 350 may be realized by an ASIC, an FPGA, or another type of integrated circuit.

The machining control unit 310 controls the feed drive unit 32, the displacement drive unit 40, and the machining electrical power source 28. By controlling the feed drive unit 32, the machining control unit 310 causes the wire electrode 14 that performs electric discharge machining on the workpiece W, to move from the upper wire guide 16 toward the lower wire guide 18 at a feed rate specified by the program. By controlling the displacement drive unit 40, the machining control unit 310 causes the wire electrode 14 to move relatively with respect to the workpiece W in the X direction and the Y direction along a machining path specified by the program. By controlling the machining electrical power source 28, the machining control unit 310 applies a voltage to the inter-electrode gap.

The time measurement unit 320 measures the machining time period that has been required from the starting or resuming of machining on the workpiece W, until the interrupting or ending of the machining. The time measurement unit 320 may include a clock circuit that measures the current time. In this case, the time measurement unit 320 calculates the machining time period, based on the time that the machining is started or resumed, and the time that the machining is interrupted or ended. By providing a timer in the control device 30, the time measurement unit 320 may acquire a timer value instead of the current time, and may measure the aforementioned machining time period based on such a timer value. In the case that the machining on the workpiece W is started and ended without being interrupted, the machining time period measured by the time measurement unit 320 coincides with the total time period that has been required for the machining.

From the rotational position detection sensor 50, the acquisition unit 324 acquires a detection signal that indicates a rotational position of the roller 36 that feeds the wire electrode 14. Based on the detection signal acquired by the acquisition unit 324, the measurement unit 326 measures the consumption amount of the wire electrode 14 consumed during machining. The fed amount by which the wire electrode 14 has been fed out by the roller 36 can be obtained from an amount of change in the rotational position of the roller 36 that has fed out the wire electrode 14 in the machining time period during which machining is carried out on the workpiece W. The amount by which the wire electrode 14 has been fed out in the machining time period is the consumption amount of the wire electrode 14 consumed during the machining.

In the case that the machining on the workpiece W is interrupted, the consumption amount calculation unit 330 calculates the total consumption amount of the wire electrode 14 consumed during actual machining. For example, the total consumption amount consumed in the case that the machining is interrupted after the machining has been started, and thereafter, the machining is resumed and completed, is the sum of the consumption amount of the wire electrode 14 consumed by the machining from starting of the machining until interruption of the machining, and the consumption amount of the wire electrode 14 consumed by the machining from resuming of the machining until ending of the machining. Using the consumption amount of the wire electrode 14 measured by the measurement unit 326, the consumption amount calculation unit 330 calculates the total consumption amount of the wire electrode 14 consumed during actual machining.

In accordance with the total consumption amount of the wire electrode 14 that was consumed, the cost of the wire electrode 14 that has been required for machining can be calculated as the machining cost. The machining cost calculation unit 350 calculates the machining cost required for machining the workpiece W, based on the total consumption amount of the wire electrode 14 consumed by machining the workpiece W. The machining cost calculation unit 350 may calculate the machining cost by including a consumables cost in accordance with a consumption amount of consumables of the wire electric discharge machine 10, such as an amount of wear or abrasion of the electrode pin 281, a consumption amount of the working fluid filter, and the like. The machining cost calculation unit 350 may calculate the machining cost by further including a labor cost and a machine usage fee, which depend on the time that has been required for the machining.

As noted previously, the machining on the workpiece W may be interrupted. For example, when an interruption request is made to the machining control unit 310 during machining on the workpiece WA, the machining on the workpiece WA is interrupted since machining on another workpiece WB is started. Responsive to an operation made by an operator, the operation unit 42 sends the aforementioned interruption request to the machining control unit 310. The operation unit 42 is constituted by a touch panel, buttons, or the like. When such an interruption request is received from the operation unit 42, the machining control unit 310 controls the wire electric discharge machine 10, and thereby interrupts the machining on the workpiece WA.

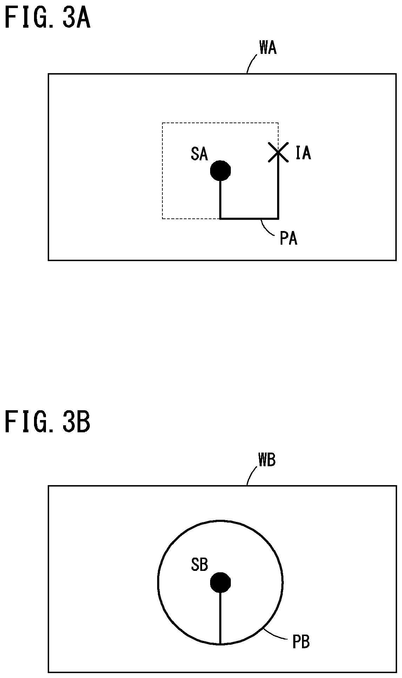

FIG. 3A is a diagram illustrating an example of a machining PA of an object to be machined (workpiece) WA. FIG. 3B is a diagram showing an example of a machining PB of an object to be machined (workpiece) WB. As shown in FIG. 3A, the machining control unit 310 controls the wire electric discharge machine 10, and thereby initiates the machining PA of the workpiece WA from a machining starting position SA of the workpiece WA. During the machining PA carried out on the workpiece WA, since it becomes necessary to preferentially carry out the machining PB on the workpiece WB which differs from the workpiece WA, the operator operates the operation unit 42. In accordance with such an operation, the operation unit 42 sends out an interruption request to the machining control unit 310. When there is an interruption request, the machining control unit 310 interrupts the machining PA. The machining position at the time when the machining control unit 310 interrupts the machining PA is referred to as a machining position IA.

After the machining PA has been interrupted, the wire electric discharge machine 10 disconnects the wire electrode 14. Thereafter, when the workpiece WB is mounted at another location on the table 12 by the operator, the wire electric discharge machine 10 automatically feeds the wire electrode 14. Automatic feeding of the wire electrode is completed by sandwiching and gripping the wire electrode 14 between the pinch roller 44 and the feed roller 46. Consequently, a state is brought about in which tension is applied to the wire electrode 14. In order to cause the machining PB on the workpiece WB to be started, the operator operates the operation unit 42 in a manner so that a program corresponding to the machining PB is executed. In accordance with such an operation, the machining control unit 310 controls the wire electric discharge machine 10, and thereby initiates the machining PB on the workpiece WB from the machining starting position SB of the workpiece WB. When execution of the program corresponding to the machining PB is completed, the machining PB comes to an end.

After the machining PB is completed, since it is necessary to resume the machining PA on the workpiece WA, the workpiece WB is removed from the table 12 by the operator. In this case, disconnection and automatic feeding of the wire electrode 14 are carried out by the wire electric discharge machine 10. The operator operates the operation unit 42 in order to resume the machining PA. In accordance with such an operation, execution of the program corresponding to the machining PA is resumed. The machining control unit 310 controls the wire electric discharge machine 10, and thereby resumes the machining PA on the workpiece WA from the machining position IA of the workpiece WA. When execution of the program corresponding to the machining PA is completed, the machining PA comes to an end.

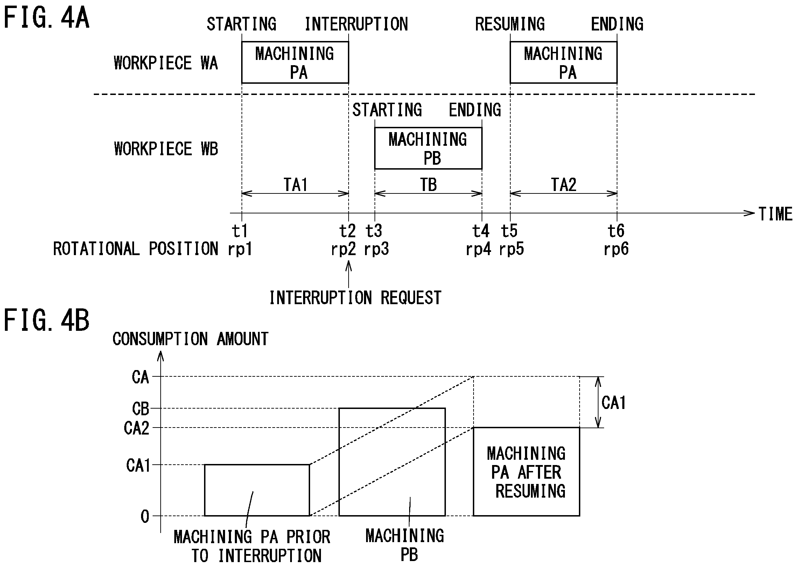

FIG. 4A is a diagram showing, in chronological order, an example of control in which machining of the workpiece WA is interrupted and machining of the workpiece WB is performed. FIG. 4B is a diagram showing an example of a consumption amount of the wire electrode 14 that is consumed during machining. When the machining control unit 310 controls the wire electric discharge machine 10, and initiates the machining PA on the workpiece WA, the time measurement unit 320 acquires the current time (the starting time of the machining PA) t1 from the clock circuit. From the rotational position detection sensor 50, the acquisition unit 324 acquires a detection signal that indicates a rotational position rp1 of the roller 36. During the machining PA on the workpiece WA, in the case that an interruption request from the operation unit 42 has been received in the machining control unit 310, the machining control unit 310 controls the wire electric discharge machine 10 to interrupt the machining PA. At this time, the time measurement unit 320 acquires the current time (the time when the machining PA is interrupted) t2 from the clock circuit. From the rotational position detection sensor 50, the acquisition unit 324 acquires a detection signal that indicates a rotational position rp2 of the roller 36.

The machining time period TA1 that has been required for the machining PA from starting until interruption of the machining PA is obtained as a difference between the time t2 and the time t1. The consumption amount CA1 of the wire electrode 14 consumed by the machining PA from starting until interruption of the machining PA is measured based on the rotational positions rp1 and rp2 of the roller 36 indicated by the detection signals acquired respectively at the time t1 when the machining PA is started and the time t2 when the machining PA is interrupted.

A description will be given of an example of measuring the consumption amount CA1 of the wire electrode 14 consumed by the machining PA from starting until interruption of the machining PA. An amount of change in the rotational position of the roller 36 during the machining time period TA1 during which the machining PA is carried out is obtained as a difference ΔrpA1 between the rotational position rp2 and the rotational position rp1. From the difference ΔrpA1 in the rotational position, a measurement value of the consumption amount CA1 of the wire electrode 14 consumed by the machining PA from starting until interruption of the machining PA is obtained. A measurement value of the consumption amount of the wire electrode 14 consumed by a subsequent machining is also obtained in the same manner.

After the machining PA is interrupted, when the operation unit 42 issues a request to the machining control unit 310 to initiate the machining PB on the workpiece WB, the machining control unit 310 controls the wire electric discharge machine 10 to initiate the machining PB. At this time, the time measurement unit 320 acquires the current time (the starting time of the machining PB) t3 from the clock circuit. From the rotational position detection sensor 50, the acquisition unit 324 acquires a detection signal that indicates a rotational position rp3 of the roller 36. When execution of the program corresponding to the machining PB is completed, the machining PB comes to an end. At this time, the time measurement unit 320 acquires the current time (the ending time of the machining PB) t4 from the clock circuit. From the rotational position detection sensor 50, the acquisition unit 324 acquires a detection signal that indicates a rotational position rp4 of the roller 36.

The machining time period TB that has been required for the machining PB from the starting of the machining PB until the ending of the machining PB is obtained as a difference between the time t4 and the time t3. The total time period that has been required for the machining PB coincides with the machining time period TB. The consumption amount CB of the wire electrode 14 consumed by the machining PB from the starting of the machining PB until the ending of the machining PB is measured based on the rotational positions rp3 and rp4 of the roller 36 indicated by the detection signals acquired respectively at the time t3 when the machining PB is started and the time t4 when the machining PB is completed. The total consumption amount of the wire electrode 14 consumed by the machining PB coincides with the consumption amount CB.

After the machining PB is completed, when there is a request from the operation unit 42 to the machining control unit 310 to resume the machining PA on the workpiece WA, the machining control unit 310 controls the wire electric discharge machine 10, and thereby resumes the machining PA. At this time, the time measurement unit 320 acquires the current time (the time when the machining PA is resumed) t5 from the clock circuit. From the rotational position detection sensor 50, the acquisition unit 324 acquires a detection signal that indicates a rotational position rp5 of the roller 36. When execution of the program corresponding to the machining PA is completed, the machining PA comes to an end. At this time, the time measurement unit 320 acquires the current time (the time when the machining PA is completed) t6 from the clock circuit. From the rotational position detection sensor 50, the acquisition unit 324 acquires a detection signal that indicates a rotational position rp6 of the roller 36.

The machining time period TA2 that has been required for the machining PA from the resuming of the machining PA until the ending of the machining PA is obtained as a difference between the time t6 and the time t5. The consumption amount CA2 of the wire electrode 14 consumed by the machining PA from the resuming of the machining PA until the ending of the machining PA is measured based on the rotational positions rp5 and rp6 of the roller 36 indicated by the detection signals acquired respectively at the time t5 when the machining PA is resumed and the time t6 when the machining PA is completed.

The total time period TA that has been required for the machining PA from the starting until the ending of the machining PA is obtained as the sum of the machining time period TA1 and the machining time period TA2. The total consumption amount CA of the wire electrode 14 consumed by the actual machining PA from the starting until the ending of the machining PA is obtained as the sum of the consumption amount CA1 and the consumption amount CA2.

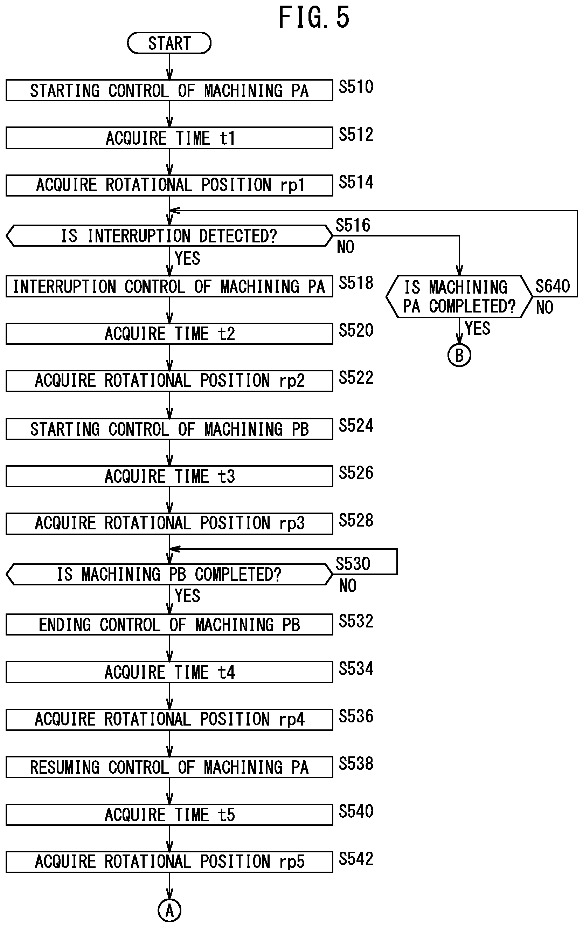

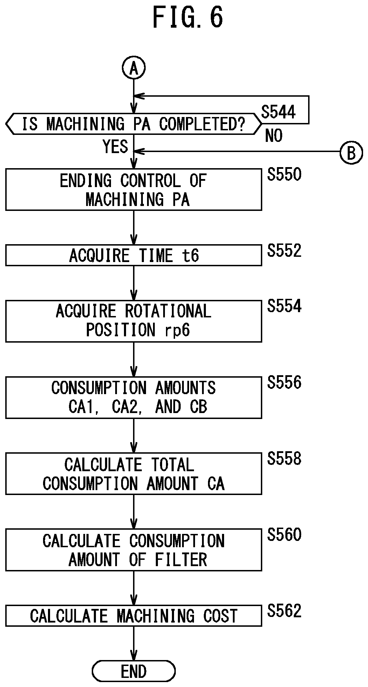

FIG. 5 and FIG. 6 are flowcharts showing a control process of the wire electric discharge machine 10 by the control device 30 in the present embodiment. When the present control process is initiated, in step S510, the machining control unit 310 carries out a control with respect to the wire electric discharge machine 10 to start the machining PA on the workpiece WA. In step S512, the time measurement unit 320 acquires from the clock circuit the starting time t1 of the machining PA. In step S514, from the rotational position detection sensor 50, the acquisition unit 324 acquires a detection signal that indicates the rotational position rp1 of the roller 36.

In step S516, the machining control unit 310 determines whether or not there is an interruption request from the operation unit 42. In the case that an affirmative determination is made in step S516 (step S516: YES), the present control process proceeds to a later-described step S518. In the case that a negative determination is made in step S516 (step S516: NO), the present control process proceeds to step S640. In step S640, the machining control unit 310 determines whether or not execution of the program corresponding to the machining PA has ended. In the case that an affirmative determination is made in step S640 (step S640: YES), the present control process proceeds to a later-described step S550. In the case that a negative determination is made in step S640 (step S640: NO), the present control process returns to step S516.

In step S518, the machining control unit 310 carries out a control with respect to the wire electric discharge machine 10 to interrupt the machining PA. In step S520, the time measurement unit 320 acquires from the clock circuit an interruption time t2 of the machining PA. In step S522, from the rotational position detection sensor 50, the acquisition unit 324 acquires a detection signal that indicates the rotational position rp2 of the roller 36. In step S524, the machining control unit 310 carries out a control with respect to the wire electric discharge machine 10 to initiate the machining PB on the workpiece WB. In step S526, the time measurement unit 320 acquires from the clock circuit a starting time t3 of the machining PB. In step S528, from the rotational position detection sensor 50, the acquisition unit 324 acquires a detection signal that indicates the rotational position rp3 of the roller 36.

In step S530, the machining control unit 310 determines whether or not execution of the program corresponding to the machining PB has ended. In the case that an affirmative determination is made in step S530 (step S530: YES), the present control process proceeds to step S532. In the case that a negative determination is made in step S530 (step S530: NO), the present control process returns to step S530. In step S532, the machining control unit 310 carries out a control with respect to the wire electric discharge machine 10 to end the machining PB. In step S534, the time measurement unit 320 acquires from the clock circuit the ending time t4 of the machining PB. In step S536, from the rotational position detection sensor 50, the acquisition unit 324 acquires a detection signal that indicates the rotational position rp4 of the roller 36.

In step S538, the machining control unit 310 carries out a control with respect to the wire electric discharge machine 10 to resume the machining PA. In step S540, the time measurement unit 320 acquires from the clock circuit the resuming time t5 of the machining PA. In step S542, from the rotational position detection sensor 50, the acquisition unit 324 acquires a detection signal that indicates the rotational position rp5 of the roller 36.

In step S544, the machining control unit 310 determines whether or not execution of the program corresponding to the machining PA has ended. In the case that an affirmative determination is made in step S544 (step S544: YES), the present control process proceeds to step S550. In the case that a negative determination is made in step S544 (step S544: NO), the present control process returns to step S544. In step S550, the machining control unit 310 carries out a control with respect to the wire electric discharge machine 10 to end the machining PA. In step S552, the time measurement unit 320 acquires from the clock circuit the ending time t6 of the machining PA. In step S554, from the rotational position detection sensor 50, the acquisition unit 324 acquires a detection signal that indicates the rotational position rp6 of the roller 36.

In step S556, the measurement unit 326 measures the consumption amount CA1 of the wire electrode 14 consumed by the machining PA from starting until interruption of the machining PA based on the rotational positions rp1 and rp2 of the roller 36 indicated by the acquired detection signals. The measurement unit 326 measures the consumption amount CA2 of the wire electrode 14 consumed by the machining PA from the resuming of the machining PA until the ending of the machining PA based on the rotational positions rp5 and rp6 of the roller 36 indicated by the acquired detection signals. The measurement unit 326 measures the total consumption amount CB of the wire electrode 14 consumed by the machining PB based on the rotational positions rp3 and rp4 of the roller 36 indicated by the acquired detection signals.

In step S558, based on the consumption amount CA1 and the consumption amount CA2 of the wire electrode 14, the consumption amount calculation unit 330 calculates the total consumption amount CA of the wire electrode 14 consumed by the actual machining PA. However, in the case that the machining PA is completed without an interruption request being made during the machining PA, the consumption amount CA1 measured in step S556 is measured as the total consumption amount CA of the wire electrode 14 consumed by the machining PA. In this case, the aforementioned interruption time t2 of the machining PA is treated as the ending time of the machining PA. Since there is no machining PB, the total consumption amount CB of the wire electrode 14 consumed by the machining PB is not measured.

In step S560, based on the total consumption amount CA of the wire electrode 14 consumed by the machining PA, the consumption amount calculation unit 330 calculates the consumption amount of consumables such as a working fluid filter and the like that are consumed by the machining PA. In the case that the total consumption amount CB of the wire electrode 14 consumed by the machining PB is measured, then based on the total consumption amount CB of the wire electrode 14 consumed by the machining PB, the consumption amount calculation unit 330 calculates the consumption amount of consumables such as a working fluid filter and the like that are consumed by the machining PB.

In step S562, based on the total consumption amount CA of the wire electrode 14 consumed by the machining PA, and the consumption amount of the working fluid filter consumed by the machining PA, the machining cost calculation unit 350 calculates the machining cost required for the machining PA. Based on the total consumption amount CB of the wire electrode 14 consumed by the machining PB, and the consumption amount of the working fluid filter consumed by the machining PB, the machining cost calculation unit 350 calculates the machining cost required for the machining PB. By using the acquired times t1 to t6, the machining cost calculation unit 350 may calculate the machining cost by further including a labor cost and a machine usage fee, which depend on the time that has been required for the machining. The machining cost calculation unit 350 may calculate the machining cost by further including a consumption cost of a consumable corresponding to an amount of wear or abrasion of the electrode pin 281. When the process of step S562 is completed, the present control process comes to an end.

### [Exemplary Modifications]

The embodiment described above may be modified in the following manner.

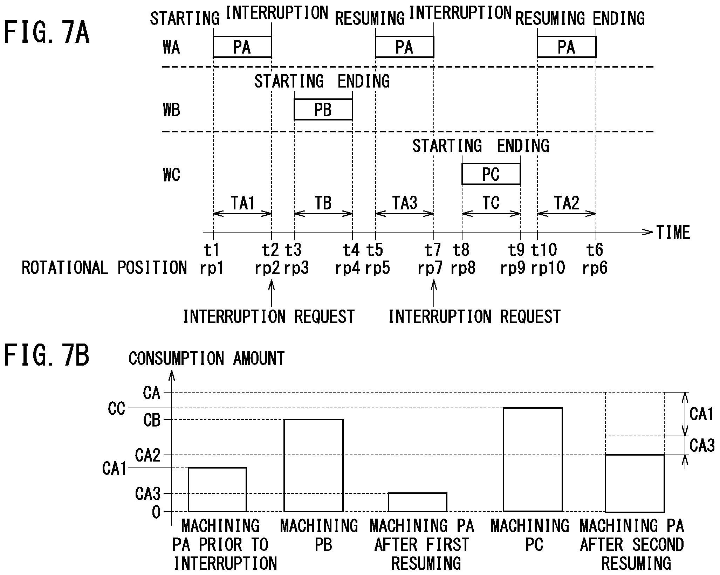

In the above-described embodiment, after the machining PB on the workpiece WB is completed, the machining PA on the workpiece WA is resumed. After the machining PA is resumed, the machining PA comes to an end without being interrupted. However, after resuming of the machining PA for the first time, during the machining PA, in the case that it becomes necessary to preferentially carry out a machining PC on an object to be machined (workpiece) WC that differs from both the workpiece WA and the workpiece WB, the machining PA may be interrupted again, and the machining PC may be carried out. The exemplary modification which is obtained in this manner will be described below using the drawings from FIG. 7 to FIG. 10.

FIG. 7A is a diagram showing, in chronological order, an example of control in which machining of the workpiece WA is interrupted again, and machining of the workpiece WC is performed. FIG. 7B is a diagram showing an example of a consumption amount of the wire electrode 14 that is consumed during machining. In FIG. 7A, after the machining PA has been started at time t1, the machining PA is interrupted for the first time at time t2. From time t3 until time t4, the machining PB on the workpiece WB is carried out, and the machining PA is resumed for the first time at time t5. The control shown in FIG. 7A, which takes place from the starting time t1 of the machining PA until the first resuming time t5 of the machining PA, coincides with the control shown in FIG. 4A. Therefore, a description of such a control will be omitted. After the machining PA has been resumed for the first time, during the machining PA, in the case that a second interruption request from the operation unit 42 has been received in the machining control unit 310, the machining control unit 310 controls the wire electric discharge machine 10, and interrupts the machining PA again (second interruption). At this time, the time measurement unit 320 acquires the current time (the time when the machining PA is interrupted for the second time) t7 from the clock circuit. From the rotational position detection sensor 50, the acquisition unit 324 acquires a detection signal that indicates a rotational position rp7 of the roller 36.

A machining time period TA3 that has been required for the machining PA from the first resuming of the machining PA until the second interruption of the machining PA is obtained as a difference between the second interruption time t7 of the machining PA and the first resuming time t5 of the machining PA. A consumption amount CA3 of the wire electrode 14 consumed by the machining PA from the first resuming of the machining PA until the second interruption of the machining PA is measured based on the rotational positions rp5 and rp7 of the roller 36 indicated by the detection signals acquired respectively at time t5 and time t7.

After the machining PA is interrupted, when the operation unit 42 issues a request to the machining control unit 310 to initiate the machining PC on the workpiece WC, the machining control unit 310 controls the wire electric discharge machine 10 to initiate the machining PC. At this time, the time measurement unit 320 acquires the current time (the starting time of the machining PC) t8 from the clock circuit. From the rotational position detection sensor 50, the acquisition unit 324 acquires a detection signal that indicates a rotational position rp8 of the roller 36. When execution of the program corresponding to the machining PC is completed, the machining PC comes to an end. At this time, the time measurement unit 320 acquires the current time (the ending time of the machining PC) t9 from the clock circuit. From the rotational position detection sensor 50, the acquisition unit 324 acquires a detection signal that indicates a rotational position rp9 of the roller 36.

The machining time period TC that has been required for the machining PC from the starting of the machining PC until the ending of the machining PC is obtained as a difference between the time t9 and the time t8. The total time period that has been required for the machining PC coincides with the machining time period TC. The consumption amount CC of the wire electrode 14 consumed by the machining PC from the starting of the machining PC until the ending of the machining PC is measured based on the rotational positions rp8 and rp9 of the roller 36 indicated by the detection signals acquired respectively at the time t8 when the machining PC is started and the time t9 when the machining PC is completed. The total amount of the wire electrode 14 consumed by the machining PC coincides with the consumption amount CC.

After the machining PC is completed, when the operation unit 42 makes a request to the machining control unit 310 to resume the machining PA on the workpiece WA for the second time, the machining control unit 310 controls the wire electric discharge machine 10, and thereby resumes the machining PA (second resuming). At this time, the time measurement unit 320 acquires the current time (the time when the machining PA is resumed for the second time) t10 from the clock circuit. From the rotational position detection sensor 50, the acquisition unit 324 acquires a detection signal that indicates a rotational position rp10 of the roller 36. When execution of the program corresponding to the machining PA is completed, the machining PA comes to an end. At this time, the time measurement unit 320 acquires the current time t6 from the clock circuit. From the rotational position detection sensor 50, the acquisition unit 324 acquires a detection signal that indicates the rotational position rp6 of the roller 36.

A machining time period TA2 that has been required for the machining PA from the second resuming of the machining PA until the ending of the machining PA is obtained as a difference between the ending time t6 of the machining PA and the second resuming time t10 of the machining PA. A consumption amount CA2 of the wire electrode 14 consumed by the machining PA from the second resuming of the machining PA until the ending of the machining PA is measured based on the rotational positions rp6 and rp10 of the roller 36 indicated by the detection signals acquired respectively at time t10 and time t6.

The total time period TA that has been required for the machining PA from the starting until the ending of the machining PA is obtained as the sum of the machining time period TA1, the machining time period TA2, and the machining time period TA3. The total consumption amount CA of the wire electrode 14 consumed by the actual machining PA from the starting until the ending of the machining PA is obtained as the sum of the consumption amount CA1, the consumption amount CA2, and the consumption amount CA3.

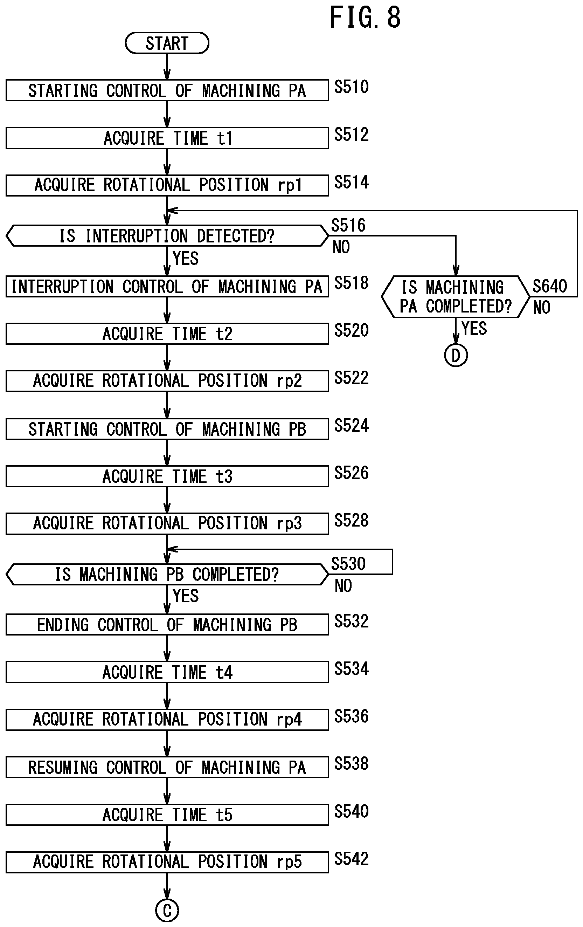

FIG. 8, FIG. 9, and FIG. 10 are flowcharts showing a control process of the wire electric discharge machine 10 by the control device 30 in the present exemplary modification. Among these flowcharts, reference numerals, which are applied to respective steps of the control process shown in FIG. 8, coincide with the reference numerals applied to respective steps of the control process shown in FIG. 5, and it indicates that the same process steps are executed. Accordingly, descriptions of the processes from steps S510 until S542, as well as the process of step S640 of FIG. 8 will be omitted.

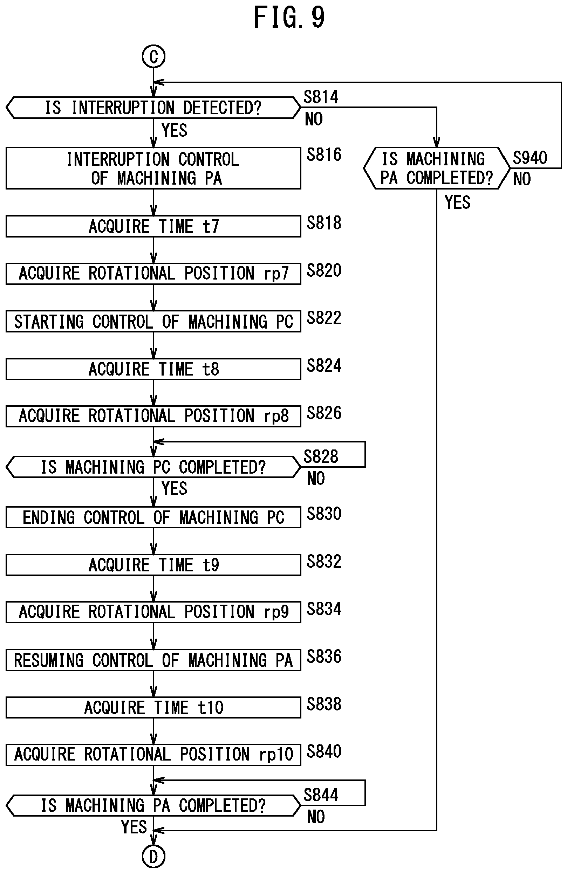

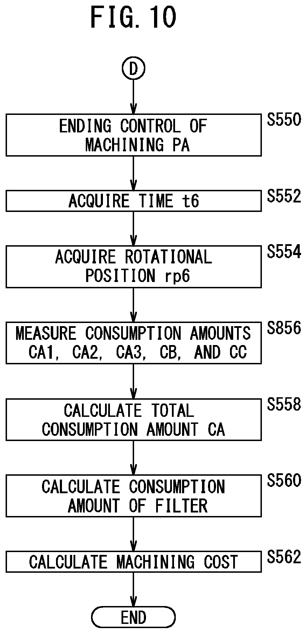

As shown in FIG. 9 and FIG. 10, when the process of step S542 in FIG. 8 is completed, the present control process proceeds to step S814, and when the process of step S640 in FIG. 8 is completed, the present control process proceeds to step S550. In step S814, the machining control unit 310 determines whether or not there is an interruption request from the operation unit 42. In the case that an affirmative determination is made in step S814 (step S814: YES), the present control process proceeds to a later-described step S816. In the case that a negative determination is made in step S814 (step S814: NO), the present control process proceeds to step S940. In step S940, the machining control unit 310 determines whether or not execution of the program corresponding to the machining PA has ended. In the case that an affirmative determination is made in step S940 (step S940: YES), the present control process proceeds to step S550. In the case that a negative determination is made in step S940 (step S940: NO), the present control process returns to step S814.

In step S816, the machining control unit 310 controls the wire electric discharge machine 10 to interrupt the machining PA for the second time. In step S818, the time measurement unit 320 acquires from the clock circuit the second interruption time t7 of the machining PA. In step S820, the acquisition unit 324 acquires from the rotational position detection sensor 50 a detection signal that indicates the rotational position rp7 of the roller 36. In step S822, the machining control unit 310 carries out a control with respect to the wire electric discharge machine 10 to initiate the machining PC on the workpiece WC. In step S824, the time measurement unit 320 acquires from the clock circuit the starting time t8 of the machining PC. In step S826, the acquisition unit 324 acquires from the rotational position detection sensor 50 a detection signal that indicates the rotational position rp8 of the roller 36.

In step S828, the machining control unit 310 determines whether or not execution of the program corresponding to the machining PC has ended. In the case that an affirmative determination is made in step S828 (step S828: YES), the present control process proceeds to step S830. In the case that a negative determination is made in step S828 (step S828: NO), the present control process returns to step S828. In step S830, the machining control unit 310 carries out a control with respect to the wire electric discharge machine 10 to end the machining PC. In step S832, the time measurement unit 320 acquires from the clock circuit the ending time t9 of the machining PC. In step S834, from the rotational position detection sensor 50, the acquisition unit 324 acquires a detection signal that indicates the rotational position rp9 of the roller 36.

In step S836, the machining control unit 310 carries out a control with respect to the wire electric discharge machine 10 to resume the machining PA for the second time. In step S838, the time measurement unit 320 acquires from the clock circuit the second resuming time t10 of the machining PA. In step S840, from the rotational position detection sensor 50, the acquisition unit 324 acquires a detection signal that indicates the rotational position rp10 of the roller 36.

In step S844, the machining control unit 310 determines whether or not execution of the program corresponding to the machining PA has ended. In the case that an affirmative determination is made in step S844 (step S844: YES), the present control process proceeds to step S550. In the case that a negative determination is made in step S844 (step S844: NO), the present control process returns to step S844.

If an affirmative determination is made in step S640 of FIG. 8, or in step S844 or step S940 of FIG. 9, the control process proceeds to step S550. Since the processes from step S550 until step S554 have been described using FIG. 6, descriptions of these processes will be omitted.

When the process of step S554 in FIG. 10 is completed, in the present control process, instead of the step S556 performed in the control process shown in FIG. 6, the process of step S856 is performed. In step S856, the measurement unit 326 measures the consumption amount CA1 of the wire electrode 14 consumed by the machining PA from the starting of the machining PA until the first interruption of the machining PA based on the rotational positions rp1 and rp2 of the roller 36 indicated by the acquired detection signals. The measurement unit 326 measures the consumption amount CA2 of the wire electrode 14 consumed by the machining PA from the second resuming of the machining PA until the ending of the machining PA based on the rotational positions rp10 and rp6 of the roller 36 indicated by the acquired detection signals. The measurement unit 326 measures the consumption amount CA3 of the wire electrode 14 consumed by the machining PA from the first resuming of the machining PA until the second interruption of the machining PA based on the rotational positions rp5 and rp7 of the roller 36 indicated by the acquired detection signals. The measurement unit 326 measures the total consumption amount CB of the wire electrode 14 consumed by the machining PB based on the rotational positions rp3 and rp4 of the roller 36 indicated by the acquired detection signals. The measurement unit 326 measures the total consumption amount CC of the wire electrode 14 consumed by the machining PC based on the rotational positions rp8 and rp9 of the roller 36 indicated by the acquired detection signals.

When the process of step S856 of FIG. 8 is completed, the control process proceeds to step S558. In step S558, based on the consumption amount CA1, the consumption amount CA2, and the consumption amount CA3 of the wire electrode 14, the consumption amount calculation unit 330 calculates the total consumption amount CA of the wire electrode 14 consumed by the actual machining PA. Moreover, in the case that the machining PA is completed without even one interruption request being made during the machining PA, the consumption amount CA1 measured in step S856 is measured as the total consumption amount CA of the wire electrode 14 consumed by the machining PA. In this case, the aforementioned first interruption time t2 of the machining PA is treated as the ending time of the machining PA. Since there is no machining PB, PC, the total consumption amount CB of the wire electrode 14 consumed by the machining PB, and the total consumption amount CC of the wire electrode 14 consumed by the machining PC are not measured. After the machining PB is completed, in the case that the machining PA is completed without an interruption request being made during the resumed machining PA, then based on the consumption amounts CA1 and CA3 measured in step S856, the total consumption amount CA consumed by the machining PA is calculated. In this case, the aforementioned second interruption time t7 of the machining PA is treated as the ending time of the machining PA. Since there is no machining PC, the total consumption amount CC of the wire electrode 14 consumed by the machining PC is not measured.

In step S560, based on the total consumption amounts CA, CB, and CC of the wire electrode 14 consumed respectively by the machining PA, the machining PB, and the machining PC, the consumption amount calculation unit 330 calculates the consumption amount of a consumable such as a working fluid filter or the like that is consumed by the machinings PA, PB, and PC.

In step S562, the machining cost calculation unit 350 calculates the machining costs required respectively for the machining PA and the machining PB, as described in step S562 of FIG. 6. Furthermore, based on the total consumption amount CC of the wire electrode 14 consumed by the machining PC and the consumption amount of a consumable of the wire electric discharge machine 10 consumed by the machining PC, the machining cost calculation unit 350 calculates the machining cost required for the machining PC. When the process of step S562 is completed, the present control process comes to an end.

### [Inventions that can be Obtained from the Embodiment]

The inventions that can be grasped from the above-described embodiment and the modifications thereof will be described below.

(1) The control device (30) that controls the wire electric discharge machine (10), includes the machining control unit (310) that: controls the wire electric discharge machine to thereby carry out the first machining (PA) on the first workpiece (WA); and in the case that the interruption request is made during the first machining, controls the wire electric discharge machine to thereby interrupt the first machining, carry out the second machining (PB) on the second workpiece (WB) that differs from the first workpiece, and resume the first machining after the second machining has been completed, the acquisition unit (324) that acquires the detection signal from the sensor (50) that detects the rotational position of the roller (36) that feeds out the wire electrode (14) of the wire electric discharge machine, the measurement unit (326) that measures, based on the detection signal, the first consumption amount (CA1) of the wire electrode consumed by the first machining from starting (t1) of the first machining until interruption (t2) of the first machining, and the second consumption amount (CA2) of the wire electrode consumed by the first machining from resuming (t5) of the first machining until ending (t6) of the first machining, and the consumption amount calculation unit (330) that calculates, using the first consumption amount and the second consumption amount, the first total consumption amount (CA) of the wire electrode consumed by the first machining. In accordance with these features, in the case that machining is interrupted due to an interruption machining, it is possible to obtain a total consumption amount of the wire electrode consumed by the machining until interruption of the machining and by the machining after resuming of the machining.
(2) The measurement unit may measure the second total consumption amount (CB) of the wire electrode consumed by the second machining from the starting (t3) of the second machining until the ending (t4) of the second machining. In accordance with this feature, the total amount of the wire electrode consumed during the interruption machining can be obtained.
(3) In the case that an interruption request is made again after having resumed the first machining, the machining control unit controls the wire electric discharge machine to thereby interrupt the first machining, carry out the third machining (PC) on the third workpiece (WC) that differs from the first workpiece and the second workpiece, and resume the first machining after the third machining has been completed, the measurement unit measures, as the third consumption amount (CA3), the consumption amount of the wire electrode consumed by the first machining from the first resuming of the first machining until the second interruption (t7) of the first machining, based on the detection signal, and measures, as the second consumption amount, the consumption amount of the wire electrode consumed by the first machining from the second resuming (t10) of the first machining until the ending of the first machining, based on the detection signal, and the consumption amount calculation unit calculates the first total consumption amount of the wire electrode consumed by the first machining, by using the first consumption amount, the second consumption amount, and the third consumption amount. In accordance with these features, in the case that the machining is interrupted multiple times due to interruption machinings, it is possible to obtain the total consumption amount of the wire electrode consumed by the machining until interruption of the machining and by the machining after resuming of the machining.
(4) The measurement unit may measure the third total consumption amount (CC) of the wire electrode consumed by the third machining from the starting (t8) of the third machining until the ending (t9) of the third machining. In accordance with this feature, the total amount of the wire electrode consumed by another interruption machining can be obtained.
(5) The consumption amount calculation unit may calculate the consumption amount of a consumable consumed by machining, based on the total consumption amount. In accordance with this feature, the consumption amount of a consumable of the wire electric discharge machine, such as the working fluid filter or the like that is consumed during machining, can be obtained.
(6) The control device for controlling the wire electric discharge machine may further include the cost calculation unit (350) that calculates the machining cost based on the total consumption amount. In accordance with this feature, in the case that machining is interrupted due to an interruption machining, the machining cost required for the machining until the interruption and after resuming of the machining, and the machining cost required for the interruption machining can be obtained.
(7) The control method for controlling the wire electric discharge machine (10), includes the steps of performing machining control to: control the wire electric discharge machine to thereby carry out the first machining (PA) on the first workpiece (WA); and in the case that the interruption request is made during the first machining, control the wire electric discharge machine to thereby interrupt the first machining, carry out the second machining (PB) on the second workpiece (WB) that differs from the first workpiece, and resume the first machining after the second machining has been completed, acquiring the detection signal from the sensor (50) that detects the rotational position of the roller (36) that feeds out the wire electrode (14) of the wire electric discharge machine, measuring, based on the detection signal, the first consumption amount (CA1) of the wire electrode consumed by the first machining from starting (t1) of the first machining until interruption (t2) of the first machining, and the second consumption amount (CA2) of the wire electrode consumed by the first machining from resuming (t5) of the first machining until ending (t6) of the first machining, and by using the first consumption amount and the second consumption amount, calculating the first total consumption amount (CA) of the wire electrode consumed by the first machining (S558). In accordance with these features, in the case that machining is interrupted due to an interruption machining, it is possible to obtain a total consumption amount of the wire electrode consumed by the machining until interruption of the machining and by the machining after resuming of the machining.
(8) In the control method, the step of measuring may include measuring the second total consumption amount (CB) of the wire electrode consumed by the second machining from starting (t3) of the second machining until ending (t4) of the second machining. In accordance with this feature, the total amount of the wire electrode consumed during the interruption machining can be obtained.
(9) In the control method, the step of performing the machining control may include, in a case that an interruption request is made again after having resumed the first machining, controlling the wire electric discharge machine to thereby interrupt the first machining, carry out the third machining (PC) on the third workpiece (WC) that differs from the first workpiece and the second workpiece, and resume the first machining after the third machining has been completed, the measuring may include measuring, as the third consumption amount (CA3), the consumption amount of the wire electrode consumed by the first machining from the first resuming of the first machining until the second interruption (t7) of the first machining, based on the detection signal, and measuring, as the second consumption amount, the consumption amount of the wire electrode consumed by the first machining from the second resuming (t10) of the first machining until the ending of the first machining, based on the detection signal, and the calculating may include calculating the first total consumption amount of the wire electrode consumed by the first machining, by using the first consumption amount, the second consumption amount, and the third consumption amount. In accordance with these features, in the case that the machining is interrupted multiple times due to interruption machinings, it is possible to obtain the total consumption amount of the wire electrode consumed by the machining until interruption of the machining and by the machining after resuming of the machining.
(10) In the control method, the step of measuring may include measuring the third total consumption amount (CC) of the wire electrode consumed by the third machining from starting (t8) of the third machining until ending (t9) of the third machining. In accordance with this feature, the total amount of the wire electrode consumed during another interruption machining can be obtained.
(11) In the control method, the step of calculating may include calculating the consumption amount of the consumable consumed by machining, based on the total consumption amount (S560). In accordance with this feature, the consumption amount of a consumable of the wire electric discharge machine, such as the working fluid filter or the like that is consumed during machining, can be obtained.
(12) The control method may further include calculating the machining cost based on the total consumption amount (S562). In accordance with this feature, in the case that machining is interrupted due to an interruption machining, the machining cost required for the machining until the interruption and after resuming of the machining, and the machining cost required for the interruption machining can be obtained.

### Reference Signs List

- 10:: wire electric discharge machine
- 12:: table
- 14:: wire electrode
- 16:: upper wire guide
- 18:: lower wire guide
- 20:: upper guide block
- 22:: lower guide block
- 24:: wire bobbin
- 26:: collection box
- 28:: machining electrical power source
- 30:: control device
- 32:: feed drive unit
- 34:: work pan
- 36:: roller
- 38:: bed
- 40:: displacement drive unit
- 42:: operation unit
- 44:: pinch roller
- 46:: feed roller
- 48:: feed motor
- 50:: rotational position detection sensor
- 281:: electrode pin
- 310:: machining control unit
- 320:: time measurement unit
- 324:: acquisition unit
- 326:: measurement unit
- 330:: consumption amount calculation unit
- 350:: machining cost calculation unit

## Claims

1. A control device (30) configured to control a wire electric discharge machine (10), the control device comprising:
a machining control unit (310) configured to: control the wire electric discharge machine to thereby carry out a first machining (PA) on a first workpiece (WA); and in a case that an interruption request is made during the first machining, control the wire electric discharge machine to thereby interrupt the first machining, carry out a second machining (PB) on a second workpiece (WB) that differs from the first workpiece, and resume the first machining after the second machining has been completed;
an acquisition unit (324) configured to acquire a detection signal from a sensor (50) configured to detect a rotational position of a roller (36) configured to feed out a wire electrode (14) of the wire electric discharge machine;
a measurement unit (326) configured to measure, based on the detection signal, a first consumption amount (CA1) of the wire electrode consumed by the first machining from starting (t1) of the first machining until interruption (t2) of the first machining, and a second consumption amount (CA2) of the wire electrode consumed by the first machining from resuming (t5) of the first machining until ending (t6) of the first machining; and
a consumption amount calculation unit (330) configured to calculate, using the first consumption amount and the second consumption amount, a first total consumption amount (CA) of the wire electrode consumed by the first machining.

2. The control device configured to control the wire electric discharge machine, according to claim 1, wherein the measurement unit measures a second total consumption amount (CB) of the wire electrode consumed by the second machining from starting (t3) of the second machining until ending (t4) of the second machining.

3. The control device configured to control the wire electric discharge machine, according to claim 1 or 2, wherein:
in a case that an interruption request is made again after having resumed the first machining, the machining control unit controls the wire electric discharge machine to thereby interrupt the first machining, carry out a third machining (PC) on a third workpiece (WC) that differs from the first workpiece and the second workpiece, and resume the first machining after the third machining has been completed;
the measurement unit measures, as a third consumption amount (CA3), a consumption amount of the wire electrode consumed by the first machining from a first resuming of the first machining until a second interruption (t7) of the first machining, based on the detection signal, and measures, as the second consumption amount, a consumption amount of the wire electrode consumed by the first machining from a second resuming (t10) of the first machining until the ending of the first machining, based on the detection signal; and
the consumption amount calculation unit calculates the first total consumption amount of the wire electrode consumed by the first machining, by using the first consumption amount, the second consumption amount, and the third consumption amount.

4. The control device configured to control the wire electric discharge machine, according to claim 3, wherein the measurement unit measures a third total consumption amount (CC) of the wire electrode consumed by the third machining from starting (t8) of the third machining until ending (t9) of the third machining.

5. The control device configured to control the wire electric discharge machine, according to any one of claims 1 to 4, wherein the consumption amount calculation unit calculates a consumption amount of a consumable consumed by machining, based on the total consumption amount.

6. The control device configured to control the wire electric discharge machine, according to any one of claims 1 to 5, further comprising a cost calculation unit (350) configured to calculate a machining cost based on the total consumption amount.

7. A control method for controlling a wire electric discharge machine (10), the control method comprising:
performing machining control to: control the wire electric discharge machine to thereby carry out a first machining (PA) on a first workpiece (WA); and in a case that an interruption request is made during the first machining, control the wire electric discharge machine to thereby interrupt the first machining, carry out a second machining (PB) on a second workpiece (WB) that differs from the first workpiece, and resume the first machining after the second machining has been completed;
acquiring a detection signal from a sensor (50) configured to detect a rotational position of a roller (36) configured to feed out a wire electrode (14) of the wire electric discharge machine;
measuring, based on the detection signal, a first consumption amount (CA1) of the wire electrode consumed by the first machining from starting (t1) of the first machining until interruption (t2) of the first machining, and a second consumption amount (CA2) of the wire electrode consumed by the first machining from resuming (t5) of the first machining until ending (t6) of the first machining; and
by using the first consumption amount and the second consumption amount, calculating a first total consumption amount (CA) of the wire electrode consumed by the first machining (S558).

8. The control method for controlling the wire electric discharge machine, according to claim 7, wherein the measuring includes measuring a second total consumption amount (CB) of the wire electrode consumed by the second machining from starting (t3) of the second machining until ending (t4) of the second machining.

9. The control method for controlling the wire electric discharge machine, according to claim 7 or 8, wherein:
the performing of the machining control includes, in a case that an interruption request is made again after having resumed the first machining, controlling the wire electric discharge machine to thereby interrupt the first machining, carry out a third machining (PC) on a third workpiece (WC) that differs from the first workpiece and the second workpiece, and resume the first machining after the third machining has been completed;
the measuring includes measuring, as a third consumption amount (CA3), a consumption amount of the wire electrode consumed by the first machining from a first resuming of the first machining until a second interruption (t7) of the first machining, based on the detection signal, and measuring, as the second consumption amount, a consumption amount of the wire electrode consumed by the first machining from a second resuming (t10) of the first machining until the ending of the first machining, based on the detection signal; and
the calculating includes calculating the first total consumption amount of the wire electrode consumed by the first machining, by using the first consumption amount, the second consumption amount, and the third consumption amount.

10. The control method for controlling the wire electric discharge machine, according to claim 9, wherein the measuring includes measuring a third total consumption amount (CC) of the wire electrode consumed by the third machining from starting (t8) of the third machining until ending (t9) of the third machining.

11. The control method for controlling the wire electric discharge machine, according to any one of claims 7 to 10, wherein the calculating includes calculating a consumption amount of a consumable consumed by machining, based on the total consumption amount (S560).

12. The control method for controlling the wire electric discharge machine, according to any one of claims 7 to 11, further comprising calculating a machining cost based on the total consumption amount (S562).
